# EUROPEAN PATENT SPECIFICATION

(11) **EP 1 331 546 B1**
(45) Date of publication and mention of the grant of the patent: **28.10.2009**
(21) Application number: 02018388.5
(22) Date of filing: 14.08.2002
(51) Int. Cl.: G06F 3/033, G06F 3/046

(54) **Hand-writing input device for cellular phone**
Handschriftliche Eingabevorrichtung für ein Mobilfunktelefon
Dispositif d'entrée manuelle pour téléphone cellulaire

(30) Priority: 25.01.2002 US 54876
(43) Date of publication of application: 30.07.2003
(73) Proprietor: Ace Cad Enterprise Co., Ltd., Hisn Tien City, Taipei Hsien (TW)
(72) Inventor: Wu, Yuan-Heng, Hisn Tien City, Taipei Hsien (TW); Wang, Chien-Feng, Hisn Tien City, Taipei Hsien (TW)
(74) Representative: Viering, Jentschura & Partner

(56) References cited:
- EP-A- 0 718 750
- GB-A- 2 289 555
- US-A- 3 904 822
- US-A- 5 714 720
- US-A1- 2001 006 369
- US-B1- 6 204 457
- US-B1- 6 311 042

## Description

### BACKGROUND OF THE INVENTION

### 1. Field of the invention

The present invention relates to a hand writing input device for a cellular phone, and more particularly, to a hand writing input device with a digital tablet which can be combined with a cellular phone to directly input hand written information from a digital tablet to the cellular phone without using key pad on the cellular phone to input data.

### 2. Description of the Prior Art

The cellular phone has become a prevailing communication apparatus nowadays. It is not only capable of communicating by voices but also capable of transmitting messages, so the cellular phone users may choose to send messages instead of speaking on the phone. There are many cutting-edge functions available nowadays. In addition to infrared ray transmission, internet connection is also provided on cellular phones so the users can retrieve data or send emails or download graphic data or text from web sites. The Cellular phone has become a basic tool in daily life.

Although a cellular phone has many auxiliary functions, users mostly input data through key pad on said phone, which is a quite time consuming effort when keying. Besides, data in graphic form or in handwriting form are not easily acceptable to cellular phone, which, accordingly, allows room for improvements.

US 2001/0006369 A1 discloses a low cost x-y digitizing system for use in consumer electronic devices, such as portable digital assistants, mobile telephones, web browsers and the like.

The inventor has endeavored for years carrying out studies and experiments and come to propose the present invention.

### SUMMARY OF THE INVENTION

It is an object of the present invention to provide a hand-writing input device for a cellular phone by which the writings or graphic data can be reappeared or displayed on the screen of the cellular phone in order for users to proceed with transmission or storage of said displayed data.

It is another object of the present invention to provide a hand-writing input device for a cellular phone by which the handwritings or graphic data can be converted into computer recognized characters and then displayed on the screen of cellular phone in order to enable the users for transmission or storage of data.

It is still another object of the present invention to provide a hand-writing input device for a cellular phone by which a digital pen containing ink or an ink cartridge or a digital inking pen can be used to write on a paper laid on the top of digital tablet. So the users can have duplicate copy of the input data, one stored on the cellular phone and one on hard copy.

Another object of the present invention is to provide a practical hand-writing input device for cellular phone, which can greatly reduce time and effort when users input data to cellular phone.

To achieve these and other aforesaid objects, the present invention provides a hand-writing input device for a cellular phone comprising a digital tablet and a digital pen having the features of the independent claim. Preferred embodiments of the hand writing input device according to the present invention are described in the dependent claims. The digital pen further comprises an electromagnetic signal emitting circuit which emits signals when the digital pen is pressed against the digital tablet for input, while the digital tablet comprises a wire grid formed by two perpendicular sets of parallel conducting wires to receive an electromagnetic signal from the digital pen when it is pressed against the tablet and to induce a current signal. This current signal is further transmitted to a signal selector contained in the digital tablet and then the signal is amplified by a signal amplifier contained in the digital tablet. The amplified current signal is converted to a digital signal by an analog/digital converter in the digital tablet, and is treated in a microcontroller in the digital tablet to convert the signal to data of the coordinate for the position and relative information. Data of coordinate for the position and relative information can be stored and collected to form further track data. Single datum of coordinate or track data then can be transmitted either by wire or wireless through transmission interface therein to the cellular phone. These data are treated by the application program module or the driver and are converted into graphic data, hand written form, or computer recognized characters thereby forming an e-mail, or a brief message, or a document. These data can be sent to any desired destination or stored in the cellular phone through transmission/storage module.

### BRIEF DESCRIPTION OF THE DRAWINGS

The drawing disclose an illustrative embodiment of the present invention which serves to exemplify the various advantages and objects hereof, and are as follows:
Fig. 1 is a block diagram in which the operational flow chart of the present invention is shown;
Fig. 2 is a schematic view showing a first embodiment of the present invention;
Fig. 3 is a schematic view showing a second embodiment of the present invention.

### DETAILED DESCRIPTION OF THE PREFERRED EMBODIMENT

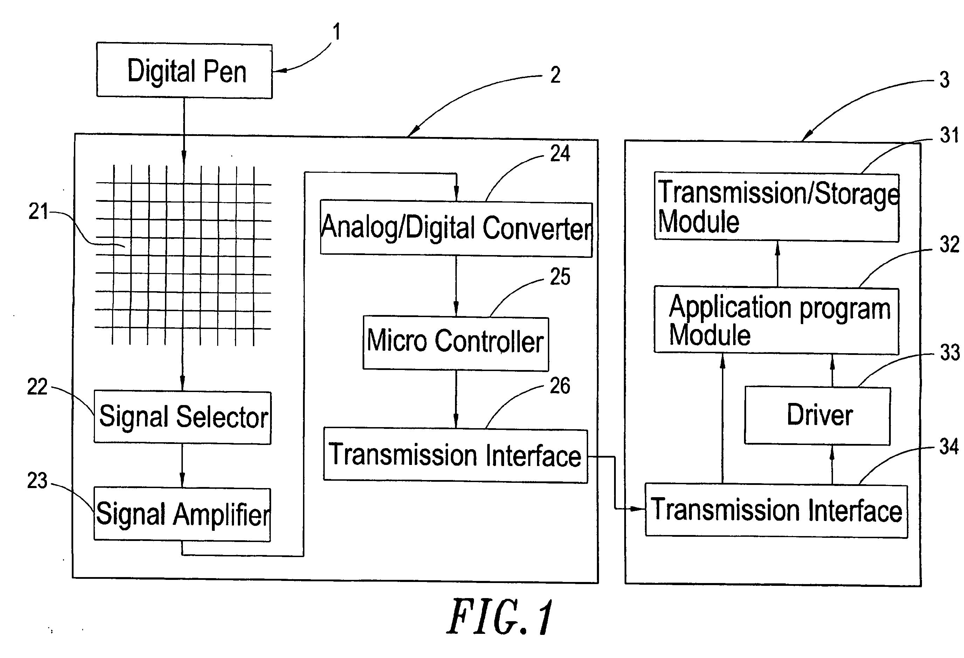

Referring to Fig.1, as shown in the blocks, the hand writing input device for cellular phone according to the present invention comprises: a digital pen 1 containing an electromagnetic signal transmitting circuit for emitting electromagnetic signals when writing or drawing on a digital tablet 2 with the digital pen 1; the digital tablet 2 further including a signal selector 22, a signal amplifier 23, an analog/digital converter 24, a micro controller 25, and a transmission interface 26, wherein a wire grid 21 formed of two perpendicular sets of parallel conducting wires is provided on the digital tablet 2. When writing or drawing on the digital tablet 2 with the digital pen 1, the electromagnetic signal emitting from the digital pen 1 is received by the wire grid 21, such that current signals are induced in wire grid whereat the digital pen 1 and digital tablet 2 are contacted. The selected current signal from the signal selector 22 is amplified by the signal amplifier 23 and then the amplified current signal is converted to a digital signal by the analog/digital converter 24, and is treated in the micro controller 25 to form data of the coordinate for the position and relative information. The single datum of coordinate or track data from collected information can be transmitted by wire or wireless to the cellular phone 3 through the transmission interfaces 26, 34 respectively in the digital tablet 2 and the cellular phone 3. The transmission can be either in wired or in wireless transmission form. The wired form may be in RS-232, USB, regular cellular phone interface specification, or IEEE 1394,while the wireless form may be in IR, RF or bluetooth. Cellular phone 3 at least comprises a transmission interface 34, a driver 33 or a application program module 32, and a transmission/storage module 31. These data are then treated by the application program module 32 or the driver 33 and are converted into graphic data, hand written form, or computer recognized characters through a handwriting recognition software thereby forming an e-mail, or a brief message, or a document. These data can be sent to any desired destination or stored in the cellular phone 3 by the transmission/storage module 31.

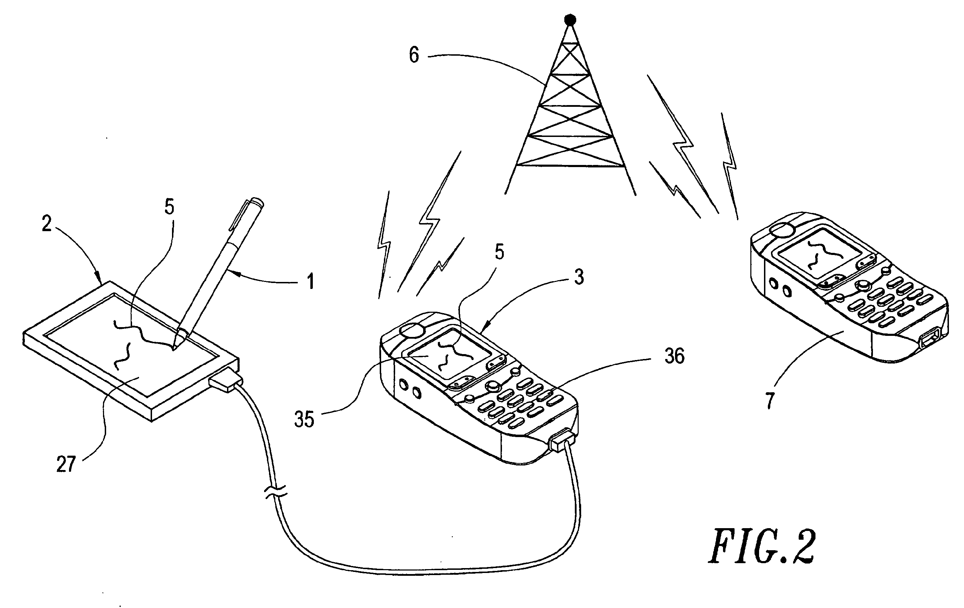

Referring to Fig.2, in this first embodiment of the present invention the digital tablet 2 is combined with the cellular phone 3, without affecting existing original components of the cellular phone 3. The information is entered into the cellular phone 3 without keying from the pad 36 on the cellular phone 3, instead, handwriting or graphic data 5 are directly input on the surface 27 of the digital tablet 2 with the digital pen 1, and the aforesaid handwriting or graphic data 5 will reappear as hand written form on the screen 35 of the cellular phone 3 or reappear as computer recognized characters via a handwriting recognition software depending on the actual requirements. Meanwhile, it is optional when transmitting from the digital tablet 2 to cellular phone 3. The users may either choose synchronous transmission with input action or asynchronously transmission after completion of a series of input action, which depends on the hardware specification of cellular phone. Besides, the information may be transmitted to another cellular phone 7, or email box via a transmitter station 6 or via the internet. If it is desirable, the information may be stored locally in the user's own phone 3.

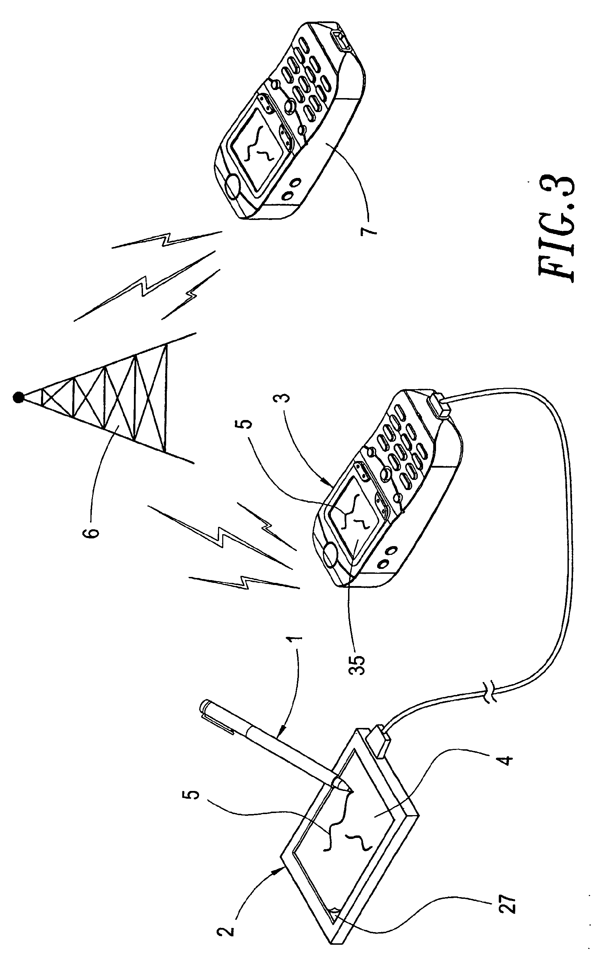

Referring to Fig.3, in the second embodiment of the present invention, in addition to emitting electromagnetic signal, the digital pen 1 may be made containing ink or ink cartridge or a digital inking pen capable of writing on a sheet of paper 4 laid on the surface 27 of the digital tablet 2 so that the data may be preserved on the paper 4 as a hard copy of the input data and can be used for future reference. As for transmitting data, it is similar to the first embodiment described above accompanying with Fig.2.

Obviously, the present invention has the following noteworthy advantages:
1.The present invention can be combined with cellular phone to allow the data to be input from the digital tablet directly and transmitted to the cellular phone to improve the input device limited by the design of conventional cellular phone.
2.The handwriting or graphic data are able to be displayed or reappear as hand written form on the screen of the cellular phone for users to store or transmit.
3.Processed by a handwriting recognition software, the entered handwriting or graphic data can be converted to computer recognized character and shown on screen of cellular phone for further transmission or storage in the cellular phone.
4.A digital pen containing ink cartridge or ink or a digital inking pen may be used to write directly on a paper laid on the digital tablet for the users to keep a hard copy of the input data.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A hand-writing input device for a cellular phone (3) comprising:
a digital pen (1) containing at least an electromagnetic signal emitting circuit;
a digital tablet (2) containing a signal selector (22), a signal amplifier (23), an analog/digital converter (24), a microcontroller (25), and a transmission interface (26), and a wire grid (21) formed of two perpendicular sets of parallel conducting wires being provided on the surface (27) of said digital tablet (2);
by using said digital pen (1) to input on said digital tablet (2), the electromagnetic signal emitted from said digital pen (1) is received by said wire grid (21) on said digital tablet (2) so that current signals are induced in said wire grid (21) when said digital pen (1) and said digital tablet (2) contact each other, the selected current signal is amplified after passing through said signal selector (22), then said amplified current signal is converted to a digital signal by said analog/digital converter (24), and is treated in said microcontroller (25) to form data of the coordinate for the position and relative information, these data then are transmitted to said cellular phone (3) through said transmission interface (26) of said digital tablet (2) and received by a transmission interface (34) of said cellular phone (3), these data are then treated by said cellular phone (3) and are converted into handwritten form, graphic data, or computer recognized characters through a handwriting recognition software, thereby forming an e-mail, or a brief message, or a document, these data can be sent to any desired destination or stored in the cellular phone (3) through a transmission/storage module (31);
**characterized in that**,
when said data is to be transmitted from said digital tablet (2) to said cellular phone (3), the user may either choose a synchronous mode with input action or an asynchronous mode after completion of a series of input action, which depend on the hardware specification of said cellular phone (3).

2. The device of claim 1, wherein said transmission interface (26) for said digital tablet (2) and said transmission interface (34) for said cellular phone (3) are wire transmission interfaces.

3. The device of claim 1, wherein said transmission interface (26) for said digital tablet (2) and said transmission interface (34) for said cellular phone (3) are wireless transmission interfaces.

4. The device of claim 1, wherein said digital pen (1) contains ink or an ink cartridge for writing or drawing.

5. The device of claim 4, wherein a paper (4) can be laid on the surface (27) of said digital tablet (2) for writing or drawing on said paper (4) with said digital inking pen (1) to keep hard copy of input data.

## Patentansprüche

1. Eine Handschrift-Eingabe-Vorrichtung für ein Mobiltelefon (3), aufweisend:
einen digitalen Stift (1), der mindestens einen Elektromagnetisches-Signal-Sende-Schaltkreis aufweist,
eine digitale Schreibtafel (2), aufweisend einen Signalauswähler (22), einen Signalverstärker (23), einen Analog-Digital-Wandler (24), einen Mikrocontroller (25) und eine Übertragungsschnittstelle (26), und ein Leitungsgitter (21), das aus zwei zueinander senkrechten Sätzen paralleler Leitungsdrähte gebildet ist, die auf der Oberfläche (27) der digitalen Schreibtafel (2) vorgesehen sind,
wobei durch die Verwendung des digitalen Stiftes (1) für eine Eingabe auf die digitale Schreibtafel (2) das elektromagnetische Signal, das von dem digitalen Stift (1) ausgesendet wird, von dem Leitungsgitter (21) auf der digitalen Schreibtafel (2) empfangen wird, so dass Stromsignale in dem Leitungsgitter (21) induziert werden, wenn der digitale Stift (1) und die digitale Schreibtafel (2) einander kontaktieren, das ausgewählte Stromsignal nach dem Durchlaufen durch den Signalauswähler (22) verstärkt wird, das verstärkte Stromsignal dann mittels des Analog-Digital-Wandlers (24) in ein digitales Signal umgewandelt wird und in dem Mikrocontroller (25) verarbeitet wird, um Koordinatendaten für die Position und betreffende Information zu bilden, die Daten dann durch die Übertragungsschnittstelle (26) der digitalen Schreibtafel (2) an das Mobiltelefon (3) übertragen werden und von einer Übertragungsschnittstelle (34) des Mobiltelefons (3) empfangen werden, die Daten dann von dem Mobiltelefon (3) verarbeitet werden und durch eine Handschrift-Erkennungs-Software in eine handgeschriebene Form, in grafische Daten oder in Rechner-erkannte Zeichen umgewandelt werden, wodurch eine E-Mail oder eine kurze Nachricht oder ein Dokument gebildet werden, die Daten durch ein Übertragungs-/Speichermodul (31) an jedes gewünschte Ziel gesendet oder in dem Mobiltelefon (3) gespeichert werden können,
**dadurch gekennzeichnet, dass,**
wenn die Daten von der digitalen Schreibtafel (2) auf das Mobiltelefon (3) übertragen werden sollen, der Benutzer entweder einen Synchronmodus mit Eingabeaktion oder einen Asnynchronmodus nach dem Beenden einer Reihe von Eingabeaktionen auswählen kann, wobei dies von der Hardware-Spezifizierung des Mobiltelefons (3) abhängig ist.

2. Die Vorrichtung gemäß Anspruch 1, wobei die Übertragungsschnittstelle (26) für die digitale Schreibtafel (2) und die Übertragungsschnittstelle (34) für das Mobiltelefon (3) drahtgebundene Übertragungsschnittstellen sind.

3. Die Vorrichtung gemäß Anspruch 1, wobei die Übertragungsschnittstelle (26) für die digitale Schreibtafel (2) und die Übertragungsschnittstelle (34) für das Mobiltelefon (3) Drahtlosübertragungs-Schnittstellen sind.

4. Die Vorrichtung gemäß Anspruch 1, wobei der digitale Stift (1) Tinte oder eine Tintenpatrone zum Schreiben oder Zeichnen aufweist.

5. Die Vorrichtung gemäß Anspruch 4, wobei ein Papier (4) zum Schreiben oder Zeichnen auf das Papier (4) mit dem digitalen Tintenstift (1) auf die Oberfläche (27) der digitalen Schreibtafel (2) gelegt werden kann, um eine Papierkopie der Eingabedaten zu behalten.

## Revendications

1. Dispositif d'entrée d'écriture manuscrite pour un téléphone cellulaire (3) comprenant :
un stylo numérique (1) qui contient au moins un circuit qui émet un signal électromagnétique ;
une tablette numérique (2) qui contient un sélecteur de signaux (22), un amplificateur de signaux (23), un convertisseur analogique / numérique (24), un microcontrôleur (25), une interface de transmission (26), et une grille de fils (21) constituée de deux ensembles perpendiculaires de fils conducteurs parallèles disposés sur la surface (27) de ladite tablette numérique (2) ;
en utilisant ledit stylo numérique (1) de manière à procéder à une entrée sur ladite tablette numérique (2), le signal électromagnétique émis par ledit stylo numérique (1) est reçu par ladite grille de fils (21) sur ladite tablette numérique (2) de telle sorte que des signaux de courant soient induits dans ladite grille de fils (21) lorsque ledit stylo numérique (1) et ladite tablette numérique (2) entrent en contact, le signal de courant sélectionné est amplifié après être passé à travers ledit sélecteur de signaux (22), ensuite ledit signal de courant amplifié est converti en un signal numérique par ledit convertisseur analogique / numérique (24), et est traité dans ledit microcontrôleur (25) de manière à former des données de coordonnées de la position et des informations associées, ces données sont ensuite transmises audit téléphone cellulaire (3) par l'intermédiaire de ladite interface de transmission (26) de ladite tablette numérique (2) et reçues par une interface de transmission (34) dudit téléphone cellulaire (3), ces données sont ensuite traitées par ledit téléphone cellulaire (3) et sont converties sous une forme d'écriture manuscrite, de données graphiques, ou de caractères pouvant être reconnus par un ordinateur par l'intermédiaire d'un logiciel de reconnaissance d'écriture manuscrite, en formant de ce fait un courrier électronique, ou un message bref ou un document, ces données peuvent être envoyées vers n'importe quelle destination souhaitée ou être enregistrées dans le téléphone cellulaire (3) par l'intermédiaire d'un module de transmission / stockage (31) ;
**caractérisé en ce que**
lorsque lesdites données doivent être transmises à partir de ladite tablette numérique (2) vers ledit téléphone cellulaire (3), l'utilisateur peut choisir un mode synchrone avec une action d'entrée, ou un mode asynchrone à la fin d'une série d'actions d'entrée, ce qui dépend de la spécification matérielle dudit téléphone cellulaire (3).

2. Dispositif selon la revendication 1, dans lequel ladite interface de transmission (26) de ladite tablette numérique (2) et ladite interface de transmission (34) dudit téléphone cellulaire (3) sont des interfaces de transmission par fil.

3. Dispositif selon la revendication 1, dans lequel ladite interface de transmission (26) de ladite tablette numérique (2) et ladite interface de transmission (34) dudit téléphone cellulaire (3) sont des interfaces de transmission sans fil.

4. Dispositif selon la revendication 1, dans lequel ledit stylo numérique (1) contient de l'encre ou une cartouche d'encre afin d'écrire ou de dessiner.

5. Dispositif selon la revendication 4, dans lequel une feuille de papier (4) peut être posée sur la surface (27) de ladite tablette numérique (2) afin d'écrire ou de dessiner sur ladite feuille de papier (4) avec ledit crayon numérique (1) qui contient de l'encre, de manière à conserver une trace écrite des données d'entrée.
